# EUROPÄISCHE PATENTSCHRIFT

(11) **EP 0 340 211 B1**
(45) Veröffentlichungstag und Bekanntmachung des Hinweises auf die Patenterteilung: **19.01.1994**
(21) Anmeldenummer: 89890126.9
(22) Anmeldetag: 27.04.1989
(51) Int. Cl.: B29C 59/04, B29C 47/54, A63C 5/00

(54) **Verfahren zum Herstellen von Laufflächenbelägen für Skier, Ski-Lauf-Flächenbauteil mit einem so hergestellten Laufflächenbelag sowie Ski mit einem solchem Laufflächenbelag oder Laufflächenbauteil**
Process for the production of undersurfaces of skis, ski-undersurface prefabricated with a so produced undersurface as well as a ski with such an undersurface or undersurface prefabricate
Procédé pour la fabrication de semelles de skis, élément préfabriqué comprenant une semelle ainsi réalisée et ski comportant une telle semelle ou un tel élément

(30) Priorität: 27.04.1988 AT 1065/88
(43) Veröffentlichungstag der Anmeldung: 02.11.1989
(73) Patentinhaber: ISOSPORT VERBUNDBAUTEILE Ges.m.b.H., A-7000 Eisenstadt (AT)
(72) Erfinder: Schamesberger, Robert, A-7000 Eisenstadt (AT)
(74) Vertreter: Stampfer, Heinz

(56) Entgegenhaltungen:
- EP-A- 0 205 289
- CH-A- 579 929
- FR-A- 2 314 739
- MODERN PLASTICS INTERNATIONAL, Band 9, Dezember 1979, Seiten 30-31, Lausanne,CH; Engineering & Processing News: "New process molds continuous partsat high speed with fine detail"

## Beschreibung

Die Erfindung betrifft ein Verfahren zum Herstellen von Laufflächenbelägen für Skier durch Extrusion eines band- oder plattenförmigen Materials, das zumindest überwiegend aus Polyäthylen besteht. Sie betrifft ferner einen Laufflächenbauteil für Alpinskier mit einem solchen Laufflächenbelag sowie einen Ski mit diesem Laufflächenbelag oder Laufflächenbauteil.

Im Skibau wird seit einigen Jahren als Material für Laufflächenbeläge fast ausschließlich Polyäthylen verwendet (vgl. FR-A-2 314 739). Der Grund hierfür liegt in dem apolaren Charakter des Polyäthylens und den damit verbundenen sehr guten Gleiteigenschaften am Schnee, seiner Wachsaufnahmefähigkeit sowie in seiner hohen Verschleißfestigkeit. Die beim Gleiten der Ski-Laufflächen auf Schnee, Eis und/oder Wasser auftretenden tribologischen Vorgänge sind nicht ganz geklärt. Es gilt jedoch als weitgehend gesichert, daß sich fast immer gleichzeitig, jedoch mit von Fall zu Fall unterschiedlicher Gewichtung, Reibungsphänomene zwischen Aggregatzustände fest-fest, also zwischen dem Laufflächenmaterial und dem Schnee, als auch zwischen festflüssig, d.h. zwischen dem Laufflächenmaterial und einem entstehenden Schmelzwasserfilm auftreten.

Zur Minimierung der Energieverluste bei der Festkörperreibung wird eine hohe Oberflächenhärte des laufflächenmaterials angestrebt, während man, um die Reibungsverluste bei der Festkörper-Flüssigkeitsreibung niedrig zu halten, eine möglichst turbulente Strömung im Schmelzwasserfilm zu erzielen sucht. Um dem Rechnung zu tragen, verwendet man derzeit in der Skiproduktion Laufflächenbeläge aus einem hochmolekularen Polyäthlyen, wobei man zu ihrer Herstellung das Polyäthylenpulver zu dichten Blöcken heiß sintert, aus denen dann die Laufflächenbeläge durch einen Schälvorgang gewonnen werden. Die Turbulenz der Strömung wird durch eine Rauhigkeit der Lauffläche begünstigt, welche durch Anschleifen der Lauffläche am fertigen Ski erzeugt wird.

Die Anmelderin hat nun gefunden, da_{ß}- wie immer auch das Anschleifen der Laufflächen durchgeführt wird - ein kurzzeitiges oberflächiges Erhitzen des Polyäthylens über den Kristallitschmelzpunkt nicht zu vermeiden ist. Bei der nachfolgenden Abkühlung und der Rekristallisation des Polyäthylens ergibt sich schließlich ein Kristallisationsgrad an der Lauffläche, der niedriger ist als der Kristallisationsgrad vor dem Anschleifen und damit eine Verringerung der Oberflächenhärte des Polyäthylen-Laufflächenmaterials durch den Schleifvorgang. Diese Oberflächenhärteverringerung schwankt nicht unwesentlich von Belag zu Belag. Außerdem ist durch das Anschleifen ein völlig reproduzierbares Rauhigkeitsprofil nicht zu erreichen. Dies alles führt dazu, daß bei der Skiproduktion die Gleiteigenschaften der mit den beschriebenen Laufflächenbelägen ausgerüsteten Skier nicht unwesentlich streuen.

Hier will die Erfindung Abhilfe schaffen. Die Erfindung, wie sie in den Ansprüchen 1 bis 8 gekennzeichnet ist, löst zunächst die Aufgabe, ein Verfahren zum Herstellen von Laufflächenbelägen für Skier in Form eines band- oder plattenförmigen, zumindest überwiegend aus Polyäthylen bestehenden Materials anzugeben, das zu Laufflächenbelägen führt, deren Gleiteigenschaften in geringerem Maße streuen als bei den bekannten Laufflächenbelägen etwa gleich guter Qualität, wobei das Anschleifen der Laufflächen am fertigen Ski vermieden und die Skiherstellung dadurch vereinfacht werden kann.

Gegenstand der Erfindung ist ferner ein Laufflächenbauteil mit Ski-Stahlkanten für Alpinskier, der dadurch gekennzeichnet ist, daß er einen durch das erfindungsgemäße Verfahren hergestellten Laufflächenbelag aufweist.

Gegenstand der Erfindung ist schließlich ein Ski, der einen durch das erfindungsgemäße Verfahren hergestellten Laufflächenbelag oder einen erfindungsgemäßen Laufflächenbauteil enthält.

Die Erfindung wird nachstehend anhand der Figuren beispielsweise erläutert.

Zur Herstellung eines bandförmigen Materials aus einem Polyäthylen mit einer mittleren Molmasse von etwa 5.10⁶ bedient man sich eines sogenannten Ram-Extrusionsverfahrens. Dieses Verfahren wurde in den letzten Jahren zur Verarbeitung von ultrahochmolekularen Thermoplasten entwickelt, die wegen ihrer hohen mittleren Molmasse nicht mehr plastifizierbar sind und sich daher durch eine übliche Schmnelzextrusion nicht mehr verarbeiten lassen. Bei diesem Ram-Extrusionsverfahren wird der zu extrudierende Strang quasi kontinuierlich gesintert.

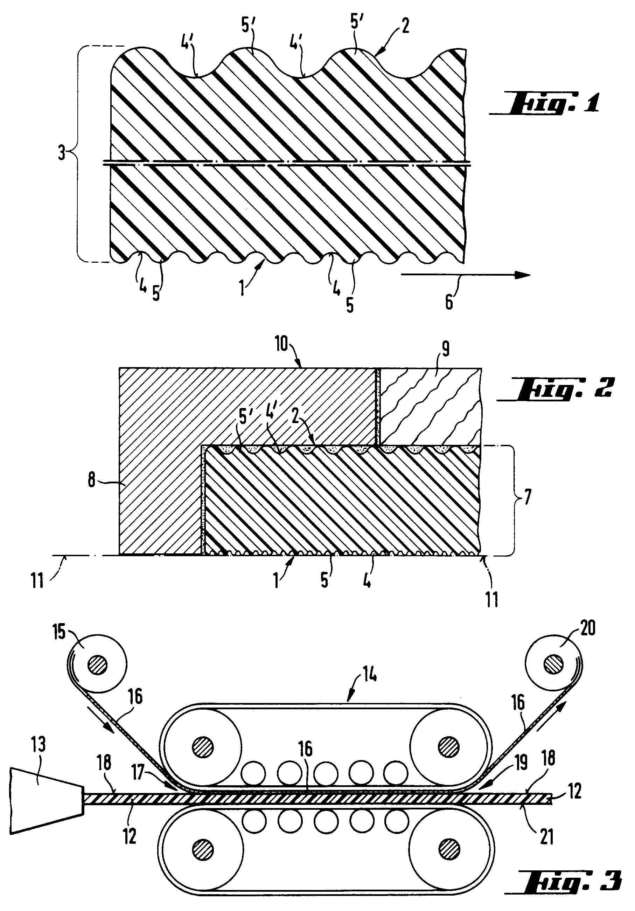

Die Querschnittskontur der Düsenöffnung am Extruderausgang weist dabei zwei gegenüberliegende Längsseiten in Form von Wellenlinien mit sehr kleinen Amplituden auf, so daß man bei der Ram-Extrusion des Polyäthylens ein Band erhält, von dem in Fig. 1 ein Randbereich schematisch im Schnitt dargestellt ist. Die Unter- und Oberseite 1, 2 des Bandes 3, das eine Dicke im Bereich von z.B. zwischen 0,8 und 1,4 mm hat, weist in Extrusionsrichtung verlaufende Rillen 4, 4′ bzw. Rippen 5, 5′ auf, deren Dimensionen in den Figuren übertrieben groß dargestellt sind. An der Bandunterseite 1, welche beim Einsatz des Bandmaterials als Laufflächenbelag die Ski-Lauffläche bildet, sind die Rillen 4 wesentlich schmäler als die Rillen 4′ an der als Verklebeseite bestimmten Bandoberseite 2. Die in Richtung des Pfeiles 6 gemessene und nach DIN 4768, Bl. 1 (1974) bestimmte mittlere Rauhtiefe Rₐ ist dabei z.B. für die Bandunterseite 1 gleich 3 µm und für die Bandoberseite 2 gleich 8 µm. Durch die reliefförmige Oberflächenstruktur der Bandoberseite 2 wird die Verklebbarkeit des Bandes verbessert.

Das extrudierte Band 3 wird nun an der Oberseite 2 zur weiteren Verbesserung der Verklebbarkeit beflammt und stellt dann das fertige Laufflächenbelagmaterial dar. Bänder, die mit einer Breite eines Vielfachen einer Laufflächenbelagssbreite extrudiert werden, unterteilt man dann durch Längsschnitte in die einzelnen Laufflächenbelagsbänder. Die so erhaltenen Endlosbänder werden schließlich auf die gewünschten Abmessungen der Laufflächenbeläge abgelängt.

Die rillenförmige Oberflächenstruktur des Bandes kann nach einer vorteilhaften Variante des erfindungsgemäßen Verfahren auch dadurch erhalten werden, daß man das extrudierte noch warme Band knapp nach seinem Austritt aus der Extruderdüse durch eine Kalibrierdüse zieht, deren Kanal einen Ausgangsquerschnitt mit einer Kontur aufweist, die der Querschnittskontur des herzustellenden Thermoplast-Bandes entspricht. Eine rillenförmige oder aber auch anders geformte Oberflächenstruktur kann gemäß einer weiteren Verfahrensvariante auch mit Hilfe eines Kalanderwalzenpaares, deren Walzenoberflächen entsprechend strukturiert sind, in die Oberfläche des aus der Extruderdüse austretenden noch warmen Bandes eingeprägt werden.

Der Einsatz der so hergestellten Ski-Laufflächenbeläge bei der Skiherstellung erfolgt vorteilhaft über das Herstellen eines Ski-Laufflächenbauteiles. Fig. 2 zeigt den Randbereich eines solchen Laufflächenbauteils schematisch im Querschnitt. Man erkennt den Laufflächenbelag 7, eine Stahlkante 8, sowie eine Einlage 9 aus Holzfurnier, die miteinander zu einem Laufflächenbauteil 10 verklebt sind. Dabei sind die Dicken der einzelnen Komponenten übertrieben groß dargestellt. Für die Herstellung des Laufflächenbauteils 10 werden die miteinander zu verbindenden Teile an den zu verklebenden Flächen mit einem Bindemittelauftrag versehen, zusammengefügt und das Ganze für die Verklebung unter Druck zwischen planparallelen Flächen gehalten. Auf diese Weise wird erreicht, daß an dem fertigen Laufflächenbauteil die Ebene 11, welche an der Lauffläche des Laufflächenbelages 7 die Rippen 5 berührt, mit den ebenen Unterseiten der Stahlkanten 8 fluchtet. Der so hergestellte Laufflächenbauteil 10 kann nun in üblicher Weise bei der Skiherstellung eingesetzt werden, wobei ein besonderes Schleifen der Lauffläche am fertigen Ski nicht mehr erforderlich ist.

Eine andere Variante des erfindungsgemäßen Laufflächenbelages sei nun anhand von Fig. 3 beschrieben.

Ein Polyäthylen-Band 12 einer Breite von 100 mm und einer Dicke von 1,3 mm wird aus einem Polyäthylen einer mittleren Molmasse von etwa 5.10⁶ durch ein Ram-Extrusionsverfahren hergestellt. Das aus der Extruderdüse 13 mit einer Extrusionsgeschwindigkeit von 2m/min austretende noch heiße Band 12 wird dann mit einer Temperatur von 150° einer gekühlten Bandpresse 14 einer Preßlänge von ca. 350 mm zugeführt. Ein von einer Rolle 15 abgezogenes Polyamidgewebe 16 wird nun gemeinsam mit dem Band 12 bei 17 in die Bandpresse 14 eingezogen und in dieser, durch den in der Bandpresse 14 herrschenden Preßdruck von etwa 50 bar, in die anliegende Oberflächenseite 18 des Bandes 12 eingedrückt, ohne daß sich dabei das Polyamidgewebe 16 mit dem Band 12 mechanisch stärker verbindet. Während seiner Verweildauer in der Bandpresse 14 von etwa 20 s wird das Band 12 auf etwa 40°C abgekühlt und am Bandpresse-Ausgang 19 das Polyamidgewebe 16 vom Band 12 wieder abgezogen und bei 20 aufgerollt.

Bei einer Verwendung eines Polyamidgewebes 16 mit Leinenbindung und einem Flächengewicht von 95g/m², mit 19 Kettenfäden pro cm Gewebebreite sowie einer Kette zu Schußverhältnis von 1:1 wurde an der (in der Fig. 3) oberen Oberflächenseite 18 des Bandes 12 eine feine, gleichmäßige Oberflächenrauhigkeit eingeprägt, die - sowohl parallel als auch senkrecht zur Bandlängserstreckung gemessen - eine mittlere Rauhtiefe von Rₐ=1,8 µm aufweist.

Die (in der Fig. 3) untere Oberflächenseite 21 des aus der Bandpresse 14 abgeführten PolyäthylenBandes 12 wird dann zur Verbesserung der Verklebbarkeit beflammt und stellt das fertige Laufflächenbelagsmaterial dar, das dann - wie anhand von Fig. 2 beschrieben - für Laufflächenbeläge für Skier eingesetzt werden kann. Ein Ski mit diesem Laufflächenbelag zeigt am Schnee ganz hervorragende Gleiteigenschaften.

Bei den anhand von Fig. 3 beschriebenen Verfahren hergestellte Laufflächenbelägen können durch Einsatz von Polyamidgeweben unterschiedlicher Qualität und/oder mit unterschiedlichem Flächengewicht an den Gleitflächen reliefartige Oberflächenstrukturen mit Rauhtiefen Rₐ von vorteilhaft 0,1 bis 5,0 µm eingepragt werden, die zu sehr guten Gleiteigenschaften des Laufflächenbelages führen.

## Patentansprüche

1. Verfahren zum Herstellen von Laufflächenbelägen für Skier durch Extrusion eines band- oder plattenförmigen Materials, das zumindest überwiegend aus Polyäthylen besteht, dadurch gekennzeichnet, daß das eingesetzte Polyäthylen eine mittlere Molmasse (Gewichtsmittel) im Bereich zwischen 5.10⁵ und 8.10⁶ aufweist und daß an zumindest einer Oberflächenseite des band- oder plattenförmigen Materials - noch vor dessen Abkühlung bei oder nach erfolgter Extrusion - eine reliefartige Oberflächenstruktur ausgebildet wird, die gegebenenfalls eine mittlere Rauhtiefe Rₐ im Bereich zwischen 0,5 und 15 µm hat, wonach man gegebenenfalls das Material in Streifen unterteilt.

2. Verfahren nach Anspruch 1, dadurch gekennzeichnet, daß die eingearbeitete Struktur die Form von in Extrusionsrichtung verlaufenden Rillen und/oder Rippen aufweist.

3. Verfahren nach Anspruch 2, dadurch gekennzeichnet, daß die eingearbeitete reliefartige Oberflächenstruktur eine quer zur Extrusionsrichtung bestimmte mittlere Rauhtiefe Rₐ im Bereich zwischen 2 und 8 µm aufweist.

4. Verfahren nach Anspruch 2 oder 3, dadurch gekennzeichnet, daß die Oberflächenstruktur in der Extruderdüse aufgrund einer entsprechenden Formgebung der Extruderdüsenkontur ausgebildet wird.

5. Verfahren nach einem der Ansprüche 1 bis 3, dadurch gekennzeichnet, daß die Oberflächenstruktur, deren mittlere Rauhtiefe Rₐ im Bereich zwischen 1,0 und 5 µm liegt, durch einen Präge-und/oder Ziehvorgang ausgebildet wird.

6. Verfahren nach Anspruch 5, dadurch gekennzeichnet, daß in einer Bandpresse, in der zumindest ein Preßband mit einem Material mit reliefartiger Oberflächenstruktur versehen ist, durch welche in das extrudierte Polyäthylen-Material eine dazu negative Oberflächenstruktur eingeprägt wird.

7. Verfahren nach Anspruch 6, daß das mit dem Preßband versehene Material mit reliefartiger Oberflächenstruktur ein zwischen dem extrudierten Polyäthylen-Material und dem genannten Preßband mitlaufendes Gewebeband ist.

8. Verfahren nach Anspruch 7, dadurch gekennzeichnet, daß als Gewebeband ein Polyester- oder Polyamidfasergewebe eingesetzt wird.

9. Laufflächenbauteil für Alpinskier mit Stahlkanten, welches einen Polyethylen-Laufflächenbelag aufweist, dadurch gekennzeichnet, daß der Polyethylen-Laufflächenbelag ein nach einem der Ansprüche 1 bis 8 hergestellter Laufflächenbelag ist.

10. Ski mit einem Polyethylen-Laufflächenbelag, dadurch gekennzeichnet, daß er einen nach einem der Ansprüche 1 bis 8 hergestellten Laufflächenbelag oder einen Laufflächenbauteil nach Anspruch 9 aufweist.

## Claims

1. A method for the production of sole coatings for skis by extruding a strip-shaped or plate-shaped material which consists at least predominantly of polyethylene, characterized in that the polyethylene used has an average molar mass (weight average) in the range of 5 x 10⁵ and 8 x 10⁶, and that on at least one surface side of the strip-shaped or plate-shaped material - before the cooling thereof during extrusion or after extrusion has taken place - a relief-like surface structure is formed which optionally has an average surface roughness Rₐ in the range of 0.5 to 15 µm, whereafter the material is optionally subdivided into strips.

2. A method according to Claim 1, characterized in that the structure worked in has the form of grooves and/or ribs running in the direction of extrusion.

3. A method according to Claim 2, characterized in that the relief-like surface structure worked in has an average surface roughness Rₐ in the range of 2 to 8 µm, determined transversely to the direction of extrusion.

4. A method according to Claim 2 or 3, characterized in that the surface structure in the extruder nozzle is formed due to corresponding shaping of the contour of the extruder nozzle.

5. A method according to one of Claims 1 to 3, characterized in that the surface structure, the average surface roughness Rₐ of which is in the range of 1.0 to 5 µm, is formed by an embossing and/or drawing operation.

6. A method according to Claim 5, characterised in that in a belt press in which at least one pressing belt is provided with a material having a relief-like surface structure by which a surface structure which is negative thereto is embossed into the extruded polyethylene material.

7. A method according to Claim 6, characterised in that the material with relief-like surface structure provided with the pressing belt is a fabric strip which runs along between the extruded polyethylene material and the afore-mentioned pressing belt.

8. A method according to Claim 7, characterised in that a polyester or polyamide fibre fabric is used as the fabric strip.

9. A sole element for alpine skis with steel edges, which has a polyethylene sole coating, characterised in that the polyethylene sole coating is a sole coating produced according to one of Claims 1 to 8.

10. A ski with a polyethylene sole coating, characterised in that it has a sole coating produced according to one of Claims 1 to 8 or a sole element according to Claim 9.

## Revendications

1. Procédé pour la fabrication de semelles de glissement pour skis par extrusion d'un matériau en forme de bandes ou de plaques qui est constitué au moins principalement de polyéthylène, caractérisé en ce que le polyéthylène utilisé présente une masse moléculaire moyenne (poids pondéré) comprise entre 5.10⁵ et 8.10⁶ et en ce que au moins une face de surface du matériau en forme de bandes ou de plaques - avant le refroidissement de celui-ci ou après extrusion - on forme une structure de surface en relief qui présente le cas échéant une profondeur moyenne de rugosité Rₐ comprise entre 0,5 et 15 µm, le matériau étant ensuite le cas échéant séparé en bandes.

2. Procédé selon la revendication 1, caractérisé en ce que la structure imprimée présente la forme de nervures et/ou de gorges s'étendant dans la direction d'extrusion.

3. Procédé selon la revendication 2, caractérisé en ce que la structure en relief imprimée présente perpendiculairement à la direction d'extrusion, une profondeur moyenne estimée de rugosité Ra comprise entre 2 et 8 microns.

4. Procédé selon la revendication 2 ou 3, caractérisé en ce que la structure superficielle est réalisée dans la buse d'extrusion en raison d'une conformation appropriée du contour de la buse d'extrusion.

5. Procédé selon l'une des revendications 1 à 3, caractérisé en ce que la structure de surface dont la profondeur moyenne de rugosité Ra est comprise entre 1 et 5 microns, est obtenue par un processus de matriçage et/ou d'étirage.

6. Procédé selon la revendication 5, caractérisé en ce que dans une presse à bande dans laquelle est prévue au moins une bande de pressage avec un matériau ayant une structure superficielle en relief, on obtient grâce à celle-ci, dans le matériau de polyéthylène extrudé, l'impression d'une structure de surface en négatif.

7. Procédé selon la revendication 6, caractérisé en ce que le matériau prévu avec la bande de pressage à structure de surface en relief est une bande de tissu circulant entre le matériau en polyéthylène extrudé et ladite bande de pressage.

8. Procédé selon la revendication 7, caractérisé en ce qu'on utilise un tissu de libres polyester ou polyamide comme bande de tissu.(1)

9. Composant de semelle de glissement pour des skis alpins à bordures en acier, qui comporte un revêtement de semelle de glissement en polyéthylène, caractérisé en ce que le revêtement de semelle de glissement en polyéthylène est un revêtement de semelle de glissement fabriqué selon l'une des revendications 1 à 8.

10. Ski muni d'un revêtement de semelle de glissement en polyéthylène, caractérisé en ce qu'il comporte un revêtement de semelle de glissement fabriqué selon l'une des revendications 1 à 8 ou un composant de semelle de semelle de glissement selon la revendication 9.
